# EUROPEAN PATENT SPECIFICATION

(11) **EP 3 418 443 B1**
(45) Date of publication and mention of the grant of the patent: **25.11.2020**
(21) Application number: 17752987.2
(22) Date of filing: 03.02.2017
(51) Int. Cl.: D06M 15/643, B01D 53/94, B01J 33/00, D06M 13/224, D06M 15/53, F01N 3/28, F01N 13/10, F01N 13/14, D06M 101/00, F01N 3/021, D04H 1/4218

(54) **MAT MATERIAL AND EXHAUST SYSTEM**
MATTENMATERIAL UND ABGASSYSTEM
MATÉRIAU DE TAPIS ET SYSTÈME D'ÉCHAPPEMENT

(30) Priority: 16.02.2016 JP 2016027390
(43) Date of publication of application: 26.12.2018
(73) Proprietor: IBIDEN Co., Ltd., Gifu 503-8604 (JP)
(72) Inventor: OKABE, Takahiko, Takahama-shi Aichi 444-1301 (JP)
(74) Representative: Winter, Brandl, Fürniss, Hübner, Röss, Kaiser, Polte - Partnerschaft mbB
(86) International application number: PCT/JP2017/003899
(87) International publication number: WO 2017/141724

(56) References cited:
- EP-A1- 0 710 631
- WO-A1-2015/038366
- WO-A1-2015/038366
- WO-A1-2015/045638
- WO-A1-2015/059881
- JP-A- H03 249 281
- JP-A- H06 240 580
- JP-A- H06 240 580
- JP-A- H06 287 864
- JP-A- H06 294 071
- JP-A- S61 115 988
- JP-A- 2000 212 876
- JP-A- 2000 320 327
- JP-A- 2011 208 344
- US-A1- 2004 234 428

## Description

### TECHNICAL FIELD

The present invention relates to an exhaust system with a mat material.

### BACKGROUND ART

Conventionally, in order to purify toxic substances such as toxic gas contained in exhaust gas discharged from an internal combustion engine such as an engine, an exhaust gas purification device is disposed in an exhaust passage of the internal combustion engine.

The exhaust gas purification device is provided with an exhaust gas treating body to purify exhaust gas. In order to maintain the temperature in the exhaust gas purification device at a catalyst activation temperature or higher, it is effective to maintain the high temperature of exhaust gas that flows into the exhaust gas purification device.

Exhaust gas flows from the internal combustion engine into the exhaust gas purification device through an exhaust pipe. Thus, wrapping a heat insulating material around the surface of the exhaust pipe is effective in maintaining the high temperature of exhaust gas that flows through the exhaust pipe. It is also effective to wrap a heat insulating material not only around the exhaust pipe but also around the surface of the exhaust gas purification device and/or the exhaust gas treating body. It is effective to dispose a heat insulating material at various portions in an exhaust system in order to maintain the temperature of the exhaust system as a whole.

One known heat insulating material is a mat material made of inorganic fibers. Patent Literature 1 discloses applying a dust generation inhibitor to the mat material.

### CITATION LIST

### - Patent Literature

Patent Literature 1: JP H06-240580A
Patent Literature 2: WO 2015/045638A1

### SUMMARY OF INVENTION

### - Technical Problem

The surfaces of the exhaust pipe, the exhaust gas treating body, and the exhaust gas purification device in the exhaust system are subjected to high temperatures. Thus, unfortunately, among components of the mat material, those having low heat resistance may be thermally decomposed and scattered in the engine room or the like, generating malodor.

In particular, when a synthetic resin-based binder (such as an acrylic resin) is applied as a dust generation inhibitor to the mat material, generation of malodor in the engine room is unfortunately apparent.

The present invention aims to provide a mat material that generates less odor even when disposed in the exhaust system and exposed to high temperatures.

### - Solution to Problem

In order to achieve the above object, the present invention provides an exhaust system according to claim 1. The mat material includes inorganic fibers and an oily fiber-scattering inhibitor attached to a surface of the inorganic fibers, wherein the amount of the fiber-scattering inhibitor attached is 0.05 to 2.0% by weight, and the mat material has an odor index of 80 or less as a relative value determined by an odor sensor from the odor of decomposed gas generated when the mat material is placed on a 500°C hot plate, when the odor index of a mat material to which 1.0% by weight of an acrylic resin as a fiber-scattering inhibitor is attached is taken as 130.

The mat material of the present invention includes inorganic fibers, and an oily fiber-scattering inhibitor in an amount of 0.05 to 2.0% by weight which is sufficient for fiber scattering prevention is attached to the inorganic fibers. Thus, the mat material has a low fiber scattering rate. A low fiber scattering rate is preferred because fiber scattering is suppressed during production of the mat material, particularly during a punching process. It is also preferred because fiber scattering is suppressed during assembly work such as wrapping of the mat material around the surface of the exhaust pipe, the surface of the exhaust gas treating body, and/or the surface of the exhaust gas purification device.

In addition, the mat material has an odor index of 80 or less as a relative value determined by an odor sensor from the odor of decomposed gas generated when the mat material is placed on a 500°C hot plate, when the odor index of a mat material to which 1.0% by weight of an acrylic resin as a fiber-scattering inhibitor is attached is taken as 130.

The mat material of the present invention is designed such that the odor index determined by a sensor is within a low range even when the fiber-scattering inhibitor is thermally decomposed. This prevents worsening of the odor in the engine room.

The term "odor index" as used herein is an index obtained by measuring decomposed gas generated when the mat material is placed on a 500°C hot plate, using a semiconductor-type odor sensor "Handheld Odor Monitor OMX-SRM" (Shinyei Technology Co. , Ltd.). The odor index is a relative value, taking the odor index of a mat material to which 1.0% by weight of an acrylic resin (Nipol Lx854E available from Zeon Corporation) as a fiber-scattering inhibitor is attached as 130.

In the mat material of the present invention, the fiber-scattering inhibitor preferably contains silicone oil.

Preferably, the fiber-scattering inhibitor further contains a surfactant.

The mat material preferably has a water-repellent surface.

The silicone oil has a lower carbon content than synthetic resin, and is thus less likely to generate malodor.

In addition, with the use of a surfactant, the silicone oil can be diluted in water into an emulsion to be attached to the mat material. This allows the silicone oil to be thinly and uniformly attached to the mat material.

Further, since the use of the silicone oil can impart water repellency to the surface of the mat material, it is likely possible that water such as rainwater is prevented at the surface of the mat material from entering and attaching to the exhaust pipe surface.

In the mat material of the present invention, the fiber-scattering inhibitor preferably contains a plant-derived component.

Preferably, the fiber-scattering inhibitor further contains a surfactant.

Odor that generates from thermal decomposition of plant-derived components is usually not unpleasant to people. Thus, it is considered that generation of malodor is suppressed, compared to the case where a synthetic resin is used.

In addition, with the use of a surfactant, the plant-derived component can be diluted in water into an emulsion to be attached to the mat material. This allows the plant-derived component to be thinly and uniformly attached to the mat material.

In the mat material of the present invention, the fiber-scattering inhibitor preferably contains a surfactant formed from a plant-derived component.

The surfactant formed from a plant-derived component functions by itself as a fiber-scattering inhibitor that generates less malodor. Due to its surface activating ability, the surfactant can be diluted in water into an emulsion to be attached to the mat material. This allows the surfactant formed from a plant-derived component to be thinly and uniformly attached to the mat material.

According to the invention,
when the mat material is trisected into a top surface portion, a middle portion, and a bottom surface portion in the thickness direction, the amount of the fiber-scattering inhibitor attached to the bottom surface portion is smaller than that in the top surface portion, and the mat material is disposed such that the bottom surface portion faces at least one member selected from the group consisting of an exhaust gas purification device, an exhaust gas treating body, and an exhaust pipe.

The mat material is disposed such that the rear surface in which the amount of the fiber-scattering inhibitor attached is small faces at least one of the members such as an exhaust gas purification device, an exhaust gas treating body, and an exhaust pipe which are subjected to high temperatures. In this manner, generation of malodor due to thermal decomposition of the fiber-scattering inhibitor can be suppressed.

The mat material of the present invention preferably includes needle-punch marks. In the mat material including needle-punch marks, the fibers are entangled each other through the needle-punch marks, so that there is no need to apply a binder. Thus, generation of odor can be suppressed.

Preferably, the mat material of the present invention further includes inorganic particles attached thereto.

The inorganic particles attached to the mat material increase the frictional force between the inorganic fibers, thus increasing the warping force of the mat material. This suppresses displacement of the mat material when the mat material is disposed as a heat insulating material between exhaust pipes.

When the mat material is wrapped around the exhaust gas treating body and disposed as a holding seal material between the metal casing and the exhaust gas treating body, the exhaust gas treating body is held with a higher holding force.

Even when the mat material is not disposed between anything, the inorganic particles attached to the mat material increases the friction resistance of the mat material, thus suppressing displacement of the mat material.

The mat material of the present invention is preferably used as a heat insulating material.

For use as a heat insulating material, the mat material is preferably used at various portions in the exhaust system, such as the surface of the exhaust pipe, the surface of the exhaust gas treating body, and the surface of the exhaust gas purification device.

The mat material of the present invention is preferably used as a holding seal material for holding the exhaust gas treating body by being wrapped around the exhaust gas treating body and disposed between the exhaust gas treating body and a metal casing in the exhaust gas purification device.

As the mat material is disposed at the portion described above, the mat can hold the exhaust gas treating body, prevent displacement of the exhaust gas treating body in the exhaust gas purification device, and prevent damage to the exhaust gas treating body from contact with the metal casing covering the outer periphery of the exhaust gas treating body.

The exhaust system of the present invention includes at least one member selected from the group consisting of an exhaust gas purification device, an exhaust gas treating body, and an exhaust pipe in an automotive exhaust system; and the mat material of the present invention disposed on a surface of the at least one member.

The exhaust gas purification device, the exhaust gas treating body, and the exhaust pipe are members whose surfaces are subjected to high temperatures. When the mat material of the present invention is disposed on these surfaces, the mat material can exert a heat insulating effect. Even if the fiber-scattering inhibitor contained in the mat material is thermally decomposed by the heat of these high-temperature members, the mat material generates less odor.

In another aspect, the exhaust system of the present invention includes an exhaust manifold in an automotive exhaust system; a heat insulator disposed on an outer side the exhaust manifold; and the mat material of the present invention disposed on an inner peripheral side of the heat insulator.

The heat insulator disposed on the outer side of the exhaust manifold is a member used for heat insulation. When the mat material of the present invention is disposed on the inner peripheral side of the heat insulator, a higher heat insulating effect can be exerted. The exhaust manifold is a member whose surface is subjected to high temperatures. Thus, when the mat material is disposed on or near the exhaust manifold, the fiber-scattering inhibitor contained in the mat material may be thermally decomposed. However, even if the fiber-scattering inhibitor is thermally decomposed, the mat material of the present invention generates less odor.

### BRIEF DESCRIPTION OF DRAWINGS

Fig. 1 shows a schematic perspective view of an exemplary mat material of the present invention.
Fig. 2 shows a schematic cross-sectional view of an exemplary exhaust system of the present invention.
Fig. 3 shows a schematic perspective view of another exemplary exhaust system of the present invention.
Fig. 4 shows a schematic cross-sectional view of a portion of the exhaust system of the present invention shown in Fig. 3.

Fig. 5(a) shows a schematic side view of an exemplary measurement device for measuring scattering properties of inorganic fibers. Fig. 5(b) shows a schematic plan view of an exemplary sample support arm portion constituting the measurement device for measuring scattering properties of inorganic fibers.

### DESCRIPTION OF EMBODIMENTS

The mat material and the exhaust system of the present invention are specifically described below. It should be noted that the present invention is not limited to the following structures, and may be suitably modified without changing the gist of the present invention. The present invention also encompasses a combination of two or more preferred features of the present invention described below.

The mat material of the present invention contains inorganic fibers; and an oily fiber-scattering inhibitor attached to a surface of the inorganic fibers, wherein the amount of the fiber-scattering inhibitor attached is 0.05 to 2.0% by weight, and the mat material has an odor index of 80 or less as a relative value determined by an odor sensor from the odor of decomposed gas generated when the mat material is placed on a 500°C hot plate, when the odor index of a mat material to which 1.0% by weight of an acrylic resin as a fiber-scattering inhibitor is attached is taken as 130.

In the mat material of the present invention, any inorganic fibers may be used. For example, alumina-silica fibers, alumina fibers, or silica fibers may be used. Glass fibers or biodegradable fibers may also be used. The type of fibers may be changed depending on characteristics (such as heat resistance and wind erosion resistance) required to the mat material, and it is preferred to use fibers having a sufficiently large fiber diameter or a sufficiently long fiber length to comply with environmental regulations in individual countries.

Among these fibers, low-crystalline alumina inorganic fibers are preferred, and low-crystalline alumina inorganic fibers having a mullite composition are more preferred. In addition, inorganic fibers including spinel compounds are still more preferred. High-crystalline alumina fibers are hard and brittle, and are thus not suited for work such as wrapping of the mat material around the surface of the exhaust pipe, the surface of the exhaust gas treating body, and/or the surface of the exhaust gas purification device.

The inorganic fibers are also preferably alumina fibers containing 85 to 98% by weight of an alumina component and 2 to 15% by weight of a silica component. Alumina fibers that are rich in alumina improve the heat resistance of the alumina fibers.

The mat material can be produced by various methods. For example, a needling method may be employed.

The mat material is particularly preferably a needle mat that can be produced by needle-punching an inorganic fiber base mat. The needle-punching is a treatment in which a fiber entangling means such as a needle is pushed in and out of a base mat.

The inorganic fibers constituting the mat material that can be obtained by the needling method have an average fiber length that is long enough to form an entanglement structure. For example, the average fiber length of the inorganic fibers is preferably 1 to 150 mm, more preferably 10 to 80 mm.

If the average fiber length of the inorganic fibers is less than 1 mm, the inorganic fibers are too short to be sufficiently entangled with each other. The mat material including such inorganic fibers tends to be poorly wrapped and is easily breakable. If the average fiber length of the inorganic fibers is more than 150 mm, the inorganic fibers are too long, resulting in a decrease in the number of fibers constituting the mat material. Thus, the mat material has a low density. As a result, the mat material has a low shear strength.

To measure the fiber length, fibers are pulled out without breaking from the mat using tweezers and the fiber length is measured under an optical microscope. Here, 300 fibers are pulled out, and the measurements of the fiber length are averaged to determine the average fiber length. If the fibers cannot be pulled out from the mat without breaking, it is advisable to degrease the mat and place the degreased mat into water to collect fibers without breaking by disentangling the fibers.

The basis weight (weight per unit area) of the mat material is not particularly limited, but it is preferably 200 to 4000 g/m², more preferably 900 to 3000 g/m².

The thickness of the mat material is preferably 5 to 20 mm.

In the mat material of the present invention, the fiber-scattering inhibitor is oily. As used herein, the terms "oily" refers to a form that is different from solid binder components such as acrylic resin. The fiber-scattering inhibitor is preferably a liquid at least having a certain degree of fluidity such that the fiber-scattering inhibitor flows on a flat plate when the fiber-scattering inhibitor is dropped on the flat plate and the flat plate is vertically tilted.

The amount of the fiber-scattering inhibitor attached can be calculated by determining the heating loss by heating the mat material at a temperature that is equal to or lower than the heat-resistance temperature of the inorganic fibers and that is equal to or higher than the heat-resistance temperature of the fiber-scattering inhibitor.

The amount of reduction in weight of the mat material after the mat material is heated in a heating furnace at 600°C for one hour is considered to be the amount of the fiber-scattering inhibitor attached. Thus, the amount of the fiber-scattering inhibitor attached (% by weight) can be determined by dividing the amount of reduction in weight by the weight of the mat material before heating.

The amount of the fiber-scattering inhibitor attached is 0.05 to 2.0% by weight, preferably 0.1 to 1.5% by weight.

In the mat material of the present invention, the fiber-scattering inhibitor preferably contains silicone oil.

Any silicone oil may be used. Examples thereof include straight silicone oils (such as, dimethyl silicone oil, methyl phenyl silicone oil, and methyl hydrogen silicone oil), and modified silicone oils (such as amino-modified reactive silicone oil, epoxy-modified reactive silicone oil, carboxy-modified reactive silicone oil, carbinol-modified reactive silicone oil, methacrylic-modified reactive silicone oil, mercapto-modified reactive silicone oil, phenol-modified reactive silicone oil, polyether-modified non-reactive silicone oil, methylstyryl-modified non-reactive silicone oil, alkyl-modified non-reactive silicone oil, higher fatty acid ester-modified non-reactive silicone oil, and fluorine-modified non-reactive silicone oil).

In the mat material of the present invention, preferably, the fiber-scattering inhibitor further contains a surfactant in addition to the silicone oil. Although the silicone oil is usually insoluble in water, with the use of a surfactant, it can be diluted in water into an emulsion to be attached to the mat material.

Any surfactant may be used as long as it can disperse (emulsify) the silicone oil in water. Any of an anionic surfactant, a nonionic surfactant, a cationic surfactant, or an amphoteric surfactant can be used, but an nonionic surfactant is preferably used. Among nonionic surfactants, a sorbitan fatty acid ester or a polyoxyalkylene sorbitan fatty acid ester (such as Polysorbate 20, Polysorbate 60, Polysorbate 65, or Polysorbate 80) is more preferably used.

The silicone oil preferably accounts for 60% by weight or more, more preferably 80% by weight or more, and preferably 99% by weight or less of the fiber-scattering inhibitor in the mat material of the present invention.

In the mat material of the present invention, the fiber-scattering inhibitor preferably contains a plant-derived component. Recently, the awareness for global environment protection has been increasing, and plant-derived materials are more preferably used than petroleum-derived materials in terms of carbon neutrality.

Use of a plant-derived oil is particularly preferred.

The plant-derived oil is preferably at least one selected from the group consisting of castor oil, rapeseed oil, sesame oil, canola oil, corn oil, coconut oil, palm oil, sunflower oil, camellia oil, soybean oil, cottonseed oil, peanut oil, and olive oil. More preferred among these is castor oil.

In the mat material of the present invention, preferably, the fiber-scattering inhibitor further contains a surfactant in addition to the plant-derived component. In particular, although the plant-derived oil is usually insoluble in water, with the use of a surfactant, it can be diluted in water into an emulsion to be attached to the mat material.

Any surfactant may be used as long as it can disperse (emulsify) the plant-derived component in water. Any of an anionic surfactant, a nonionic surfactant, a cationic surfactant, or an amphoteric surfactant can be used, but a nonionic surfactant is preferably used. Among nonionic surfactants, a sorbitan fatty acid ester or a polyoxyalkylene sorbitan fatty acid ester (such as Polysorbate 20, Polysorbate 60, Polysorbate 65, or Polysorbate 80) is more preferably used.

Examples of the plant-derived component other than the plant-derived oil include a polylactic acid.

An oily solution in which a biodegradable resin such as polylactic acid is dispersed in water by a surfactant can also be used as an oily fiber-scattering inhibitor. Examples of commercially available oily fiber-scattering inhibitors in which polylactic acid is dispersed in water include Landy PL-1000 and Landy PL-300 available from Miyoshi Oil & Fat Co., Ltd.

The plant-derived component preferably accounts for 60% by weight or more, more preferably 80% by weight or more, and preferably 99% by weight or less of the fiber-scattering inhibitor in the mat material of the present invention.

The fiber-scattering inhibitor in the mat material of the present invention preferably contains a surfactant formed from a plant-derived component.

The surfactant formed from a plant-derived component is preferably at least one selected from the group consisting of polyglycerol cocoate, sorbitan cocoate, sucrose fatty acid ester, cocamidopropyl betaine, palm kernel oil fatty acid amidopropyl betaine, coconut oil fatty acid monoethanolamide, coconut oil fatty acid diethanolamide, polyoxyethylene hardened castor oil, polyoxyethylene coconut oil fatty acid monoethanolamide, polyoxyethylene coconut oil fatty acid diethanolamide, polyoxyethylene coconut oil fatty acid amide, polyoxyethylene sorbitan monolaurate derived from coconut oil (Polysorbate 20), polyoxyethylene sorbitan monopalmitate derived from coconut oil (Polysorbate 40), polyoxyethylene sorbitan monostearate derived from coconut oil (Polysorbate 60), polyoxyethylene sorbitan tristearate derived from coconut oil (Polysorbate 65), polyoxyethylene sorbitan oleate derived from coconut oil (Polysorbate 80), and lecithin derived from soy.

The mat material of the present invention has an odor index of 80 or less as a relative value determined by an odor sensor from the odor of decomposed gas generated when the mat material is placed on a 500°C hot plate, when the odor index of a mat material to which 1.0% by weight of an acrylic resin as a fiber-scattering inhibitor is attached is taken as 130.

The definition and the measurement method of the odor index are as described below.

The odor index of the mat material of the present invention is preferably 65 or less, more preferably 55 or less.

In the mat material of the present invention, the mat material preferably has a water-repellent surface.

As for the degree of water repellency, preferably, when a water droplet is dropped on the surface of the mat material, the water droplet is not absorbed into the mat material. More preferably, when a water droplet is dropped on the surface of the mat material, the contact angle of the water droplet with the surface of the mat material is 30° to 150°.

With regard to the amount of the fiber-scattering inhibitor attached, preferably, when the mat material of the present invention is trisected into a top surface portion, a middle portion, and a bottom surface portion in the thickness direction, the amount of the fiber-scattering inhibitor attached to the bottom surface portion is smaller than that in the top surface portion, and the mat material is disposed such that the bottom surface portion faces at least one member selected from the group consisting of an exhaust gas purification device, an exhaust gas treating body, and an exhaust pipe.

The amount of the fiber-scattering inhibitor attached to each of the top surface portion, the middle portion, and the bottom surface portion can be determined by the same method for determining the amount of the fiber-scattering inhibitor attached to the mat material as a whole. The mat is trisected in the thickness direction and each portion is heated to determine the heating loss for calculation.

The mat material of the present invention preferably includes inorganic particles attached thereto.

Examples of the inorganic particles include particles of alumina, silica, and zirconia. These particles are preferably derived from an inorganic sol dispersion (such as alumina sol, silica sol, or zirconia sol).

The inorganic particles attached to the mat material increase the frictional force between the inorganic fibers, thus increasing the warping force of the mat material. This suppresses displacement of the mat material when the mat material is disposed as a heat insulating material between exhaust pipes.

When the mat material is wrapped around the exhaust gas treating body and disposed as a holding seal material between the metal casing and the exhaust gas treating body, the exhaust gas treating body is held with a higher holding force.

Even when the mat material is not disposed between anything, the inorganic particles attached to the mat material increases the friction resistance of the mat material, thus suppressing displacement of the mat material.

The mat material of the present invention is preferably used as a heat insulating material.

When used as a heat insulating material, the mat material is preferably used at various portions in the exhaust system, such as the surface of the exhaust pipe, the surface of the exhaust gas treating body, and the surface of the exhaust gas purification device.

The mat material of the present invention is preferably used as a holding seal material for holding the exhaust gas treating body by being wrapped around the exhaust gas treating body and disposed between the exhaust gas treating body and the metal casing in the exhaust gas purification device.

As the mat material is disposed at the portion described above, the mat material can hold the exhaust gas treating body, prevent displacement of the exhaust gas treating body in the exhaust gas purification device, and prevent damage to the exhaust gas treating body from contact with the metal casing covering the outer periphery of the exhaust gas treating body.

An exemplary shape of the mat material of the present invention is described below.

Preferably, the mat material of the present invention is a flat mat having a substantially rectangular shape in a planar view with a predetermined length in the longitudinal direction, a predetermined width, and a predetermined thickness.

In one example of the mat material of the present invention, preferably, a protruding portion is formed at a first end portion that is one of the ends of the mat in the longitudinal direction, and a recessed portion is formed at a second end portion that is the other end. Preferably, the protruding portion and the recessed portion of the mat are formed to fit each other when the mat material is wrapped around a circumferentially cylindrical exhaust gas purification device, exhaust gas treating body, or exhaust pipe.

The "substantially rectangular shape in a planar view" is a concept that encompasses both the protruding portion and the recessed portion. The substantially rectangular shape in a planar view also encompasses shapes having corners whose angles are not 90°.

The mat material of the present invention may have a shape not including the protruding portion or the recessed portion.

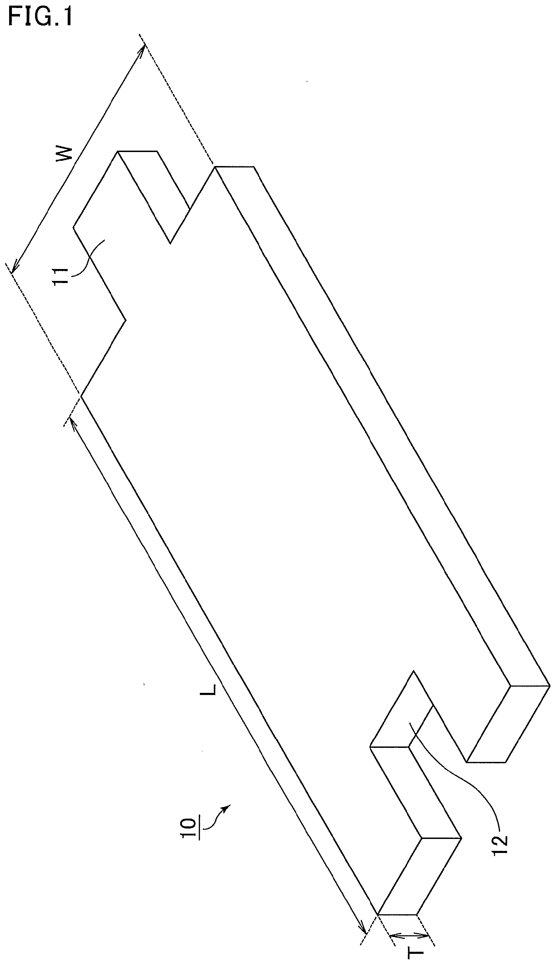

Fig. 1 shows a schematic perspective view of an exemplary mat material of the present invention.

A mat material 10 shown in Fig. 1 is a flat mat having a substantially rectangular shape in a planar view with a predetermined length in the longitudinal direction (hereinafter indicated by arrow L in Fig. 1), a predetermined width (indicated by arrow W in Fig. 1), and a predetermined thickness (indicated by arrow T in Fig. 1).

In the mat material 10, a protruding portion 11 is formed at a first end portion that is one of the ends of the mat in the longitudinal direction, and a recessed portion 12 is formed at a second end portion that is the other end. The protruding portion 11 and the recessed portion 12 of the mat are formed to fit each other when the mat material is wrapped around a circumferentially cylindrical exhaust gas purification device, exhaust gas treating body, or exhaust pipe.

An exemplary method for producing the mat material of the present invention is described below.

First, a mat including inorganic fibers is produced. The mat can be produced by various methods. For example, a needling method may be employed.

In the case of the needling method, the mat can be produced in the following manner. Specifically, first, a spinning mixture formed from, for example, a basic aluminum chloride solution and silica sol is spun by a blowing method to produce an inorganic fiber precursor having an average fiber diameter of 3 to 10 µm. Subsequently, the inorganic fiber precursor is compressed into a continuous sheet having a predetermined size, and the sheet is subjected to a firing treatment, whereby preparation of a mat is completed. At this time, a needle-punching treatment may be performed before the firing treatment.

The mat is produced as one large sheet member. This sheet member is cut into the shape of the mat material. The mat can be cut by a Thomson blade, a guillotine blade, laser, water jet, or the like. Any of the cutting method may be suitably used according to the situation, but a Thomson blade and a guillotine blade are preferred if importance is placed on mass processing, while laser and water jet are preferred if importance is placed on cutting accuracy.

Further, a fiber-scattering inhibitor is applied to the mat obtained by cutting. Thus, the mat material of the present invention can be obtained.

Preferably, the fiber-scattering inhibitor is uniformly applied in the state of being dispersed and diluted in water. Thus, to be made easily dispersible in water, the fiber-scattering inhibitor is preferably a mixture of silicone oil and a surfactant or a mixture of a plant-derived component (a plant-derived oil or the like) and a surfactant. In addition, the fiber-scattering inhibitor is preferably a surfactant itself formed from a plant-derived component.

The concentration of the fiber-scattering inhibitor in the dispersion in which the fiber-scattering inhibitor is dispersed and diluted in water is preferably 0.1 to 10% by weight, more preferably 0.3 to 3% by weight.

In addition, a resin component may be added to the dispersion in which the fiber-scattering inhibitor is dispersed and diluted in water. When the inorganic fibers become too soft when the fiber-scattering inhibitor is applied to the mat, the hardness of the inorganic fibers can be appropriately adjusted by adding a resin component.

The resin component is preferably a water-soluble polymer such as polycarboxylic acid. The resin component preferably accounts for 10 to 60% by weight of the fiber-scattering inhibitor.

If the resin component accounts for more than 60% by weight, the odor index tends to be high.

The mat is immersed in the dispersion in which the fiber-scattering inhibitor is dispersed and diluted in water, the mat is pulled out and dried, and the fiber-scattering inhibitor is applied to the dried mat. Thus, the mat material of the present invention is obtained.

The drying temperature is preferably 100°C to 180°C, and the drying time is preferably 1 to 30 minutes.

The mat may be dried by air drying in a drying furnace or by being placed on a heated hot plate.

In order to vary the amount of the fiber-scattering inhibitor attached between the top surface portion and the bottom surface portion of the mat material, the following method may be employed such as one in which the mat is immersed in the dispersion to apply the fiber-scattering inhibitor to the mat and then the fiber-scattering inhibitor is further applied to one side of the mat by spraying, or one in which only one side of the mat is brought into contact with a dispersion having a high concentration of the fiber-scattering inhibitor.

It is also possible to vary the amount of the fiber-scattering inhibitor attached between the top surface portion and the bottom surface portion of the mat material by hot air drying in which hot air is applied at a velocity of at least 2 m/second to one side of the mat material in a heating furnace.

In the case of producing a mat material to which inorganic particles are attached, it is preferred to immerse a mat in an inorganic sol dispersion containing inorganic particles. Examples of the inorganic sol dispersion include silica sol, alumina sol, and zirconia sol.

The timing at which the inorganic particles are attached is not particularly limited.

The mat may be immersed in an inorganic sol dispersion, dried, subjected to application of the fiber-scattering inhibitor, and dried so as to produce a mat material; or the mat may be immersed in a dispersion obtained by mixing the fiber-scattering inhibitor and the inorganic sol dispersion.

As a method for producing a mat material having a water-repellent surface, silicone oil may be applied to a mat including inorganic fibers.

When silicone oil is used as the fiber-scattering inhibitor, there is a case where water repellency is exerted by applying the silicone oil to the mat material at room temperature, and there is a case where water repellency is exerted by heat-treating after the silicone oil is applied to the mat material.

When the silicone oil is dimethylpolysiloxane, hydrophobic methyl groups are oriented toward the surface. Thus, the surface exhibits water repellency. In this case, a higher heat-treatment temperature results in higher water repellency because methyl groups are more completely oriented toward the surface.

The heat-treatment temperature is preferably 200°C to 450°C, more preferably 300°C to 400°C.

Examples of the silicone oil that exert water repellency when applied at room temperature include KM-742T available from Shin-Etsu Chemical Co., Ltd. Examples of the silicone oil that do not exert water repellency when applied at room temperature but exert water repellency when heat-treated at 300°C include KM-7750 available from Shin-Etsu Chemical Co., Ltd.

Based on the above, the following invention of a method for producing a water repellency mat material may be contemplated.

A method for producing a water repellency mat material, including:
applying a fiber-scattering inhibitor to a mat including inorganic fibers; and
performing heat treatment at 200°C to 450°C.

The following describes an exhaust system of the present invention which includes the mat material of the present invention.

In one aspect, the exhaust system of the present invention includes at least one member selected from the group consisting of an exhaust gas purification device, an exhaust gas treating body, and an exhaust pipe in an automotive exhaust system; and the mat material of the present invention disposed on a surface of the at least one member.

The exhaust system of the present invention includes an exhaust gas purification device in which an exhaust gas treating body is housed in a cylindrical metal casing.

An inlet-side exhaust pipe and an outlet-side exhaust pipe are connected to the metal casing.

Inside the exhaust gas purification device, a holding seal material is wrapped around the exhaust gas treating body, and the holding seal material is disposed between the exhaust gas treating body and the metal casing.

The holding seal material is a mat including inorganic fibers. Preferably, the holding seal material has a substantially rectangular shape in a planar view, including a recessed portion and a protruding portion, and the recessed portion and the protruding portion of the holding seal material are formed to fit each other when the holding seal material is wrapped around the exhaust gas treating body.

The mat material of the present invention may be used as a holding seal material.

The exhaust gas treating body is a ceramic honeycomb structured body made of porous ceramic or the like, and is used as a catalyst carrier. In the catalyst carrier, exhaust gas flows into through-holes opened at both an exhaust gas inlet-side end face and an exhaust gas outlet-side end face, and the exhaust gas is purified by the action of a catalyst supported on partition walls that separate the through-holes from each other.

The exhaust gas treating body may be a diesel particulate filter (DPF) in which ends of through-holes are alternately sealed.

Any material may be used to constitute the exhaust gas treating body. Examples thereof include non-oxides such as silicon carbide and silicon nitride and oxides such as cordierite and aluminum titanate.

The mat material of the present invention is disposed on the surface of at least one member selected from the group consisting of an exhaust gas purification device, an exhaust gas treating body, and an exhaust pipe. The surface of the exhaust gas purification device is the surface of the metal casing. When the metal casing, the exhaust gas treating body, and the exhaust pipe are cylindrical, the mat material is wrapped around the metal casing, the exhaust gas treating body, and the exhaust pipe.

The exhaust system may be configured such that the mat material of the present invention wrapped around the surface of the exhaust gas treating body inside the exhaust gas purification device functions as a holding seal material and the mat material of the present invention wrapped around the surface of the metal casing of the exhaust gas purification device functions as a heat insulating material.

The mat material of the present invention may be disposed on both the inlet-side exhaust pipe and the outlet-side exhaust pipe or on either one of them.

Preferably, the mat material of the present invention is a mat in which when the mat material is trisected into a top surface portion, a middle portion, and a bottom surface portion in the thickness direction, the amount of the fiber-scattering inhibitor attached to the bottom surface portion is smaller than that in the top surface portion, and the mat material is disposed such that the bottom surface portion faces at least one member selected from the group consisting of an exhaust gas purification device, an exhaust gas treating body, and an exhaust pipe.

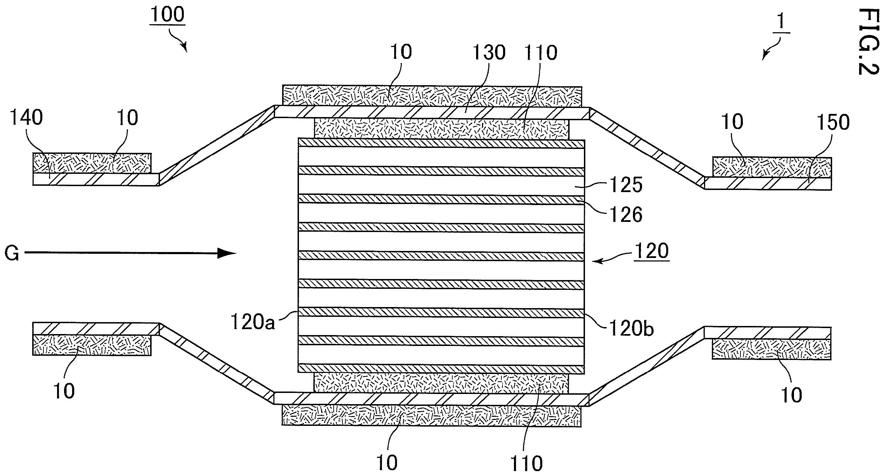

Fig. 2 shows a schematic cross-sectional view of an exemplary exhaust system of the present invention.

An exhaust system 1 shown in Fig. 2 includes an exhaust gas purification device 100 in which an exhaust gas treating body 120 is housed in a cylindrical metal casing 130.

An inlet-side exhaust pipe 140 and an outlet-side exhaust pipe 150 are connected to the metal casing 130. Arrow G indicates the direction of the exhaust gas flow.

Inside the exhaust gas purification device 100, a holding seal material 110 is wrapped around the exhaust gas treating body 120, and the holding seal material 110 is disposed between the exhaust gas treating body 120 and the metal casing 130.

The holding seal material 110 is a mat including inorganic fibers. The holding seal material 110 has a substantially rectangular shape in a planar view, including a recessed portion and a protruding portion, and the recessed portion and the protruding portion of the holding seal material 110 are formed to fit each other when the holding seal material 110 is wrapped around the exhaust gas treating body 120. The holding seal material 110 may be the mat material of the present invention.

The exhaust gas treating body 120 is a ceramic honeycomb structured body made of porous ceramic or the like, and is used as a catalyst carrier. In the catalyst carrier, exhaust gas flows into through-holes 125 opened at both an exhaust gas inlet-side end face 120a and an exhaust gas outlet-side end face 120b, and the exhaust gas is purified by the action of a catalyst supported on partition walls 126 that separate the through-holes 125 from each other.

In the exhaust system 1 shown in Fig. 2, the mat material 10 is wrapped around the surface of the exhaust gas purification device 100 (surface of the metal casing 130), the surface of the inlet-side exhaust pipe 140, and the surface of the outlet-side exhaust pipe 150.

In another aspect, the exhaust system of the present invention includes an exhaust manifold in an automotive exhaust system; a heat insulator disposed on an outer side of the exhaust manifold; and the mat material of the present invention disposed on an inner peripheral side of the heat insulator.

An exhaust manifold is attached to a lateral side of an automotive engine.

The exhaust manifold has a function to collect exhaust gas from each cylinder and to send the exhaust gas to the exhaust gas purification device. The outer peripheral surface of the exhaust manifold is partially covered with a heat insulator.

High-temperature exhaust gas flows into the exhaust manifold in the automotive exhaust system. It is preferred if the exhaust gas flows into the downstream exhaust gas treating body while the temperature remains high, because it improves the catalytic efficiency of the exhaust gas treating body. Thus, the exhaust manifold is preferably heat-insulated.

The heat insulator is a plate-shaped member made of metal or the like, and is partially fixed to the exhaust manifold with a bolt or the like, but a space exists between the heat insulator and the exhaust manifold.

The mat material of the present invention is disposed on the inner peripheral side of the heat insulator, i.e., on the side facing the exhaust manifold. The mat material of the present invention is preferably fixed to the inner peripheral surface of the heat insulator by a fixing means such as an adhesive, a bolt and a nut, a rivet, a staple, self-clinch hardware, a stud pin, or an eyelet. The mat material of the present invention to be disposed on the inner peripheral side of the heat insulator is not wrapped around a pipe, so that the mat material does not need to include a recessed portion or a protruding portion and may have a shape that is formed in accordance with the shape of the inner peripheral surface of the heat insulator.

The inner peripheral surface of the heat insulator is usually not a simple flat surface, so that it is also preferred to use multiple mat materials in combination to dispose the mat materials without a gap on the inner peripheral surface of the heat insulator.

Preferably, when the mat material of the present invention is trisected into a top surface portion, a middle portion, and a bottom surface portion in the thickness direction, the amount of the fiber-scattering inhibitor attached to the bottom surface portion is smaller than that in the top surface portion, and the mat material is disposed such that the bottom surface portion faces the exhaust manifold.

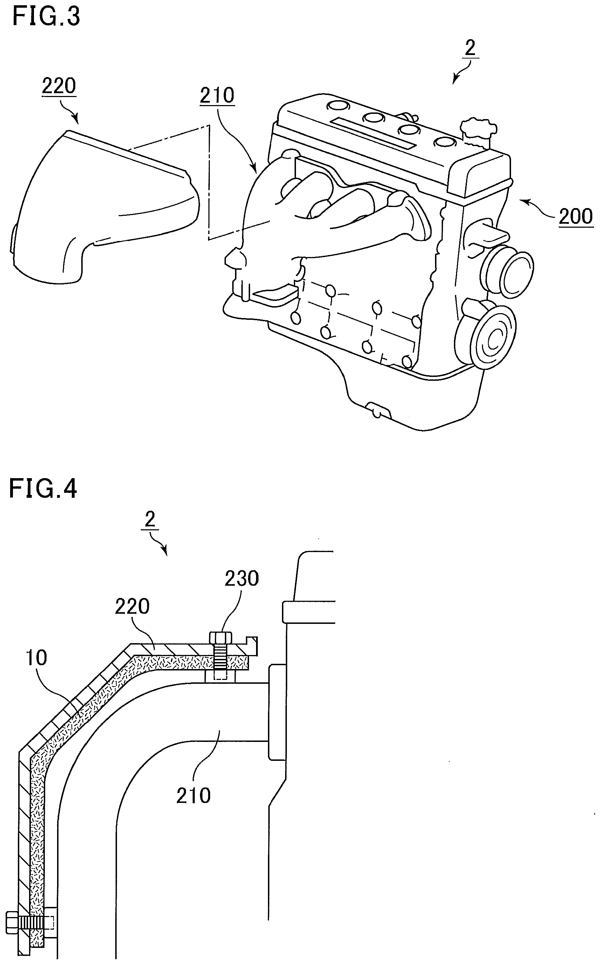

Fig. 3 shows a schematic perspective view of another exemplary exhaust system of the present invention. Fig. 4 shows a schematic cross-sectional view of a portion of the exhaust system of the present invention shown in Fig. 3.

As shown in Fig. 3, in an exhaust system 2, an exhaust manifold 210 is attached to a lateral side of an automotive engine 200. The outer peripheral surface of the exhaust manifold 210 is partially covered with a heat insulator 220.

As shown in Fig. 4, the heat insulator 220 is partially fixed to the exhaust manifold 210 with a bolt 230, but a space exists between the heat insulator 220 and the exhaust manifold 210.

The mat material of the present invention 10 is disposed on the inner peripheral side of the heat insulator 220, i.e., on the side facing the exhaust manifold 210. In Fig. 4, the mat material 10 is also fixed together with the bolt 230.

The effects of the mat material and the exhaust system of the present invention are described below.
(1) The mat material of the present invention includes inorganic fibers, and an oily fiber-scattering inhibitor in an amount of 0.05 to 2.0% by weight which is sufficient for fiber scattering prevention is attached to the inorganic fibers. Thus, the mat material has a low fiber scattering rate. A low fiber scattering rate is preferred because fiber scattering is suppressed during production of the mat material, particularly during a punching process. It is also preferred because fiber scattering is suppressed during assembly work such as wrapping of the mat material around the surface of the exhaust pipe, the surface of the exhaust gas treating body, and/or the surface of the exhaust gas purification device.
   It is also possible to prevent worsening of the odor in the engine room.
(2) In one aspect, the exhaust system of the present invention includes at least one member selected from the group consisting of an exhaust gas purification device, an exhaust gas treating body, and an exhaust pipe; and the mat material of the present invention disposed on the surface of the at least one member. Thus, the mat material can exert a heat insulating effect. Even if the fiber-scattering inhibitor contained in the mat material is thermally decomposed by the heat of these high-temperature members, the mat material generates less odor.
(3) In another aspect, the exhaust system of the present invention includes an exhaust manifold in an automotive exhaust system; a heat insulator disposed on an outer side of the exhaust manifold; and the mat material of the present invention disposed on an inner peripheral side of the heat insulator. Thus, a higher heat insulating effect can be exerted. The exhaust manifold is a member whose surface is subjected to high temperatures. When the mat material is disposed on or near the exhaust manifold, the fiber-scattering inhibitor contained in the mat material may be thermally decomposed. However, the mat material of the present invention generates less odor even when the fiber-scattering inhibitor is thermally decomposed.

### (Example)

The following describes examples that more specifically disclose the present invention. The present invention is not limited to these examples.

### (Example 1)

### (Preparation of mat)

As the mat including inorganic fibers, a needle-punched alumina fiber mat (basis weight 1050 g/m²) having a size of 20 cm × 20 cm was prepared.

### (Application of fiber-scattering inhibitor)

As the fiber-scattering inhibitor, silicone oil (KM-7750 available from Shin-Etsu Chemical Co., Ltd.) and water were mixed to prepare a dispersion in which the concentration of the fiber-scattering inhibitor was 0.5% by weight, and the mat was immersed in this dispersion.

The mat was immersed such that the amount of the fiber-scattering inhibitor attached after drying was 0.5% by weight.

Further, the mat was placed on a 150°C hot plate for hot plate drying. Thus, a mat material was produced.

### (Example 2)

The same mat as in Example 1 was prepared. As the fiber-scattering inhibitor, silicone oil (KM-742T available from Shin-Etsu Chemical Co., Ltd.) was dispersed in water to prepare an emulsion in which the concentration of the fiber-scattering inhibitor was 0.5% by weight, and the mat was immersed in this emulsion.

The mat was immersed such that the amount of the fiber-scattering inhibitor attached after drying was 0.5% by weight.

Further, the mat was placed on a 150°C hot plate for hot plate drying. Thus, a mat material was produced.

### (Example 3)

The same mat as in Example 1 was prepared. As the fiber-scattering inhibitor, silicone oil (KF-96 available from Shin-Etsu Chemical Co., Ltd.) was mixed with a surfactant (Rheodol TW-O120V available from Kao Corporation: polyoxyethylene sorbitan oleate (Polysorbate 80)), and the mixture was dispersed in water to prepare an emulsion.

This emulsion was mixed with water to prepare a dispersion in which the concentration of the fiber-scattering inhibitor containing the silicone oil and the surfactant was 0.6% by weight. The mat was immersed in this dispersion.

The mat was immersed such that the amount of the fiber-scattering inhibitor attached after drying was 0.6% by weight.

Further, the mat was placed on a 150°C hot plate for hot plate drying. Thus, a mat material was produced.

### (Example 4)

The same mat as in Example 1 was prepared. As the fiber-scattering inhibitor, a castor oil was mixed with a surfactant (Rheodol TW-O120V available from Kao Corporation: polyoxyethylene sorbitan oleate (Polysorbate 80)), and the mixture was dispersed in water to prepare an emulsion.

This emulsion was mixed with water to prepare a dispersion in which the concentration of the fiber-scattering inhibitor containing the castor oil and the surfactant was 0.5% by weight. The mat was immersed in this dispersion.

The mat was immersed such that the amount of the fiber-scattering inhibitor attached after drying was 0.5% by weight.

Further, the mat was placed on a 150°C hot plate for hot plate drying. Thus, a mat material was produced.

### (Example 5)

The same mat as in Example 1 was prepared. As the fiber-scattering inhibitor, silicone oil (KM-7750 available from Shin-Etsu Chemical Co., Ltd.) was mixed with water to prepare a dispersion, and the dispersion was further mixed with a water-soluble polymer (polycarboxylic acid).

This mixture was mixed with water to prepare a dispersion in which the concertation of the fiber-scattering inhibitor was 0.3% by weight and the concentration of the water-soluble polymer was 0.3% by weight. The mat was immersed in this dispersion.

The mat was immersed such that the amount of the fiber-scattering inhibitor attached after drying was 0.3% by weight, and the amount of the water-soluble polymer attached was 0.3% by weight.

Further, the mat was placed on a 150°C hot plate for hot plate drying. Thus, a mat material was produced.

### (Example 6)

A mat material was produced as in Example 1, except that the mat was subjected to hot air drying at a velocity of at least 2 m/sec in a heating furnace set at 150°C, instead of hot plate drying in Example 1.

When the mat material obtained was trisected into a top surface portion, a middle portion, and a bottom surface portion in the thickness direction, the amount of the fiber-scattering inhibitor attached to the bottom surface portion was smaller than that in the top surface portion. The odor was measured with the bottom surface portion on the 500°C hot plate.

### (Example 7)

A mat material was produced as in Example 2, except that the mat was subjected to hot air drying at a velocity of at least 2 m/sec in a heating furnace set at 150°C, instead of hot plate drying in Example 2.

When the mat material obtained was trisected into a top surface portion, a middle portion, and a bottom surface portion in the thickness direction, the amount of the fiber-scattering inhibitor attached to the bottom surface portion was smaller than that in the top surface portion. The odor was measured with the bottom surface portion on the 500°C hot plate.

### (Example 8)

A mat material was produced as in Example 3, except that the mat was subjected to hot air drying at a velocity of at least 2 m/sec in a heating furnace set at 150°C, instead of hot plate drying in Example 3.

When the mat material obtained was trisected into a top surface portion, a middle portion, and a bottom surface portion in the thickness direction, the amount of the fiber-scattering inhibitor attached to the bottom surface portion was smaller than that in the top surface portion. The odor was measured with the bottom surface portion on the 500°C hot plate.

### (Example 9)

A mat material was produced as in Example 4, except that the mat was subjected to hot air drying at a velocity of at least 2 m/sec in a heating furnace set at 150°C, instead of hot plate drying in Example 4.

When the mat material obtained was trisected into a top surface portion, a middle portion, and a bottom surface portion in the thickness direction, the amount of the fiber-scattering inhibitor attached to the bottom surface portion was smaller than that in the top surface portion. The odor was measured with the bottom surface portion on the 500°C hot plate.

### (Example 10)

A mat material was produced as in Example 5, except that the mat was subjected to hot air drying at a velocity of at least 2 m/sec in a heating furnace set at 150°C, instead of hot plate drying in Example 5.

When the mat material obtained was trisected into a top surface portion, a middle portion, and a bottom surface portion in the thickness direction, the amount of the fiber-scattering inhibitor attached to the bottom surface portion was smaller than that in the top surface portion. The odor was measured with the bottom surface portion on the 500°C hot plate.

### (Comparative Example 1)

The same mat as in Example 1 was prepared. As the fiber-scattering inhibitor, an acrylic resin emulsion latex (Nipol Lx854E available from Zeon Corporation) was provided.

The mat was immersed such that the amount of the fiber-scattering inhibitor attached after drying was 1.0% by weight.

Further, the mat was placed on a 150°C hot plate for hot plate drying. Thus, a mat material was produced.

### (Comparative Example 2)

In Comparative Example 1, the concentration of the acrylic resin emulsion latex was adjusted, and the mat was immersed such that the amount of the fiber-scattering inhibitor attached after drying was 0.5% by weight.

Further, the mat was placed on a 150°C hot plate for hot plate drying. Thus, a mat material was produced.

### (Comparative Example 3)

In Comparative Example 1, the concentration of the acrylic resin emulsion latex was adjusted, and the mat was immersed such that the amount of the fiber-scattering inhibitor attached after drying was 0.1% by weight.

Further, the mat was placed on a 150°C hot plate for hot plate drying. Thus, a mat material was produced.

### (Comparative Example 4)

No fiber-scattering inhibitor was applied to the mat prepared in Example 1. This mat was used as a mat material.

### (Fiber scattering rate evaluation)

The scattering properties of the inorganic fibers were measured by the following procedure.

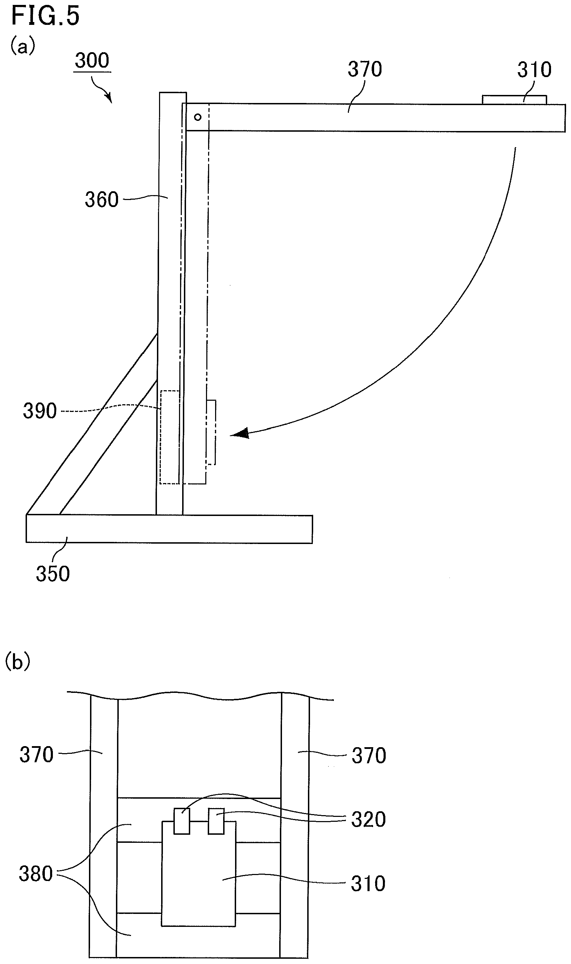

First, the mat material produced in each of the examples and the comparative examples was cut into a piece of 100 mm × 100 mm to obtain a scattering test sample 310. The inorganic fiber scattering rate of this scattering test sample can be measured using a measurement device shown in Fig. 5 (a) and Fig. 5(b).

Fig. 5(a) shows a schematic side view of an exemplary measurement device for measuring the scattering properties of the inorganic fibers. As shown in Fig. 5(a), in a test device 300, two supporting rods 360 are vertically disposed on a base 350, and sample support arms 370 are connected to respective upper ends of the supporting rods 360 such that the sample support arms 370 are rotatable within a predetermined range. Further, a vertical wall member 390 is fixed between the two supporting rods 360, at a position where the vertical wall member 390 can collide with the sample support arms.

Fig. 5(b) shows a schematic plan view of an exemplary sample support arm portion constituting the measurement device for measuring the scattering properties of the inorganic fibers. As shown in Fig. 5 (b), the other end of each sample support arm 370 is fixed by a sample-fixing member 380 that connects the sample support arms 370 to each other at their ends. Another sample-fixing member 380 is located at a position spaced apart by a certain distance, in the direction of the supporting rods 360, from the sample-fixing member 380 connected to the ends of the sample support arms 370, and the two sample support arms 370 are connected to each other at at least two portions thereof via the sample-fixing members 380.

The sample support arms 370 are locked by a specific locking mechanism at a position where the angle between the sample support arms 370 and the supporting rods 360 is 90°. Then, the scattering test sample 310 is fixed to the sample-fixing members 380 with clips 320. When the sample support arms 370 are unlocked, the sample support arms 370 and the scattering test sample 310 start declining toward the base 350 on which the supporting rods 360 are fixed, and rotate around the connecting portions between the sample support arms 370 and the supporting rods 360. Then, the sample support arms 370 collide with the vertical wall member 390 at a point when the sample support arms 370 and the supporting rods 360 are parallel to each other. The collision causes the inorganic fibers constituting the scattering test sample 310 to be partially broken and scattered. Thus, the fiber scattering rate can be determined by measuring the weight of the scattering test sample 310 before and after the collision and using the following formula.

Fiber scattering rate (% by weight) = (Weight of scattering test sample before test - Weight of scattering test sample after test)/(Weight of scattering test sample before test) × 100

### (Odor evaluation)

The mat material produced in each of the examples and the comparative examples was cut into a piece of 25 mm × 25 mm, and each piece was placed on a 500°C hot plate. Using a semiconductor-type odor sensor "Handheld Odor Monitor OMX-SRM" (Shinyei Technology Co., Ltd.), the odor index of decomposed gas was measured, with a gas suction nozzle placed about 10 to 20 cm above the mat.

The odor index of the mat material produced in each of the examples and comparative examples was indicated as a relative value, taking the odor index of the decomposed gas in Comparative Example 1 as 130.

Table 1 tabulates the evaluation results.

**[Table 1]**

| | Organic component | Amount of organic component attached (wt%) | | Fiber scattering rate | Odor index |
|---|---|---|---|---|---|
| | | Fiber-scattering inhibitor | Water-soluble polymer | (Wt%) | |
| Example 1 | Silicone oil (KM-7750) | 0.5 | - | 0.11 | 52 |
| Example 2 | Silicone oil (KM-742T) | 0.5 | - | 0.09 | 54 |
| Example 3 | Silicone oil (KF-96) | 0.6 | - | 0.08 | 56 |
| Example 4 | Castor oil | 0.5 | - | 0.10 | 65 |
| Example 5 | Silicone oil + polycarboxylic acid | 0.3 | 0.3 | 0.10 | 52 |
| Example 6 | Silicone oil (KM-7750) | 0.5 | - | 0.12 | 41 |
| Example 7 | Silicone oil (KM-742T) | 0.5 | - | 0.10 | 43 |
| Example 8 | Silicone oil (KF-96) | 0.6 | - | 0.10 | 44 |
| Example 9 | Castor oil | 0.5 | - | 0.12 | 53 |
| Example 10 | Silicone oil + polycarboxylic acid | 0.3 | 0.3 | 0.13 | 43 |
| Comparative Example 1 | Acrylic resin | 1.0 | - | 0.11 | 130 |
| Comparative Example 2 | Acrylic resin | 0.5 | - | 0.23 | 117 |
| Comparative Example 3 | Acrylic resin | 0.1 | - | 0.30 | 91 |
| Comparative Example 4 | None | - | - | 0.90 | 0 |

### (Water repellency evaluation)

The contact angle of each of the following mat materials was measured.
(Sample 1) Mat material produced in Example 1
(Sample 2) Mat material obtained by heat-treating the mat material produced in Example 1 at 300°C for 10 minutes
(Sample 3) Mat material produced in Example 2

The contact angle was measured using a contact angle meter in accordance with JIS R 3257 (Testing method of wettability of glass substrate).

According to the results, the mat material of sample 1 absorbed water droplets into the mat; the mat material of sample 2 exhibited a contact angle of 105°; and the mat material of sample 3 exhibited a contact angle of 95°.

The silicone oil used to produce the mat material of Example 1 is silicone oil that exerts water repellency when heat-treated at 300°C. The silicone oil used to produce the mat material of Example 2 is silicone oil that exerts water repellency when applied at room temperature.

The mat material of each example had a low fiber scattering rate and a low odor index. In contrast, the mat material of Comparative Example 1 had a low scattering rate but a high odor index. The mat materials of Comparative Examples 2 and 3 each had a high fiber scattering rate and a high odor index. The mat material of Comparative Example 4 had a high fiber scattering rate because no fiber-scattering inhibitor was applied thereto.

### REFERENCE SIGNS LIST

- 1,2: exhaust system
- 10: mat material
- 100: exhaust gas purification device
- 110: holding seal material
- 120: exhaust gas treating body
- 130: metal casing
- 200: automotive engine
- 210: exhaust manifold
- 220: heat insulator

## Claims

1. An exhaust system (1, 2) comprising:
at least one member selected from the group consisting of an exhaust gas purification device (100), an exhaust gas treating body (120), and an exhaust pipe (140, 150) in an automotive exhaust system (1, 2); and
a mat material (10) disposed on a surface of the at least one member, the mat material (10) comprising:
inorganic fibers; and
an oily fiber-scattering inhibitor attached to a surface of the inorganic fibers,
wherein the amount of the fiber-scattering inhibitor attached is 0.05 to 2.0% by weight,
**characterized in that**
when the mat material (10) is trisected into a top surface portion, a middle portion, and a bottom surface portion in the thickness direction, the amount of the fiber-scattering inhibitor attached to the bottom surface portion is smaller than that in the top surface portion, and
the mat material (10) is disposed such that the bottom surface portion faces the at least one member.

2. The exhaust system (1, 2) according to claim 1,
wherein the fiber-scattering inhibitor contains silicone oil.

3. The exhaust system (1, 2) according to claim 2,
wherein the fiber-scattering inhibitor further contains a surfactant.

4. The exhaust system (1, 2) according to claim 2 or 3,
wherein the mat material (10) has a water-repellent surface.

5. The exhaust system (1, 2) according to claim 1,
wherein the fiber-scattering inhibitor contains a plant-derived component.

6. The exhaust system (1, 2) according to claim 5,
wherein the fiber-scattering inhibitor further contains a surfactant.

7. The exhaust system (1, 2) according to claim 1,
wherein the fiber-scattering inhibitor contains a surfactant formed from a plant-derived component.

8. The exhaust system (1, 2) according to any one of claims 1 to 7,
wherein the mat material (10) includes needle-punch marks.

9. The exhaust system (1, 2) according to any one of claims 1 to 8, further comprising inorganic particles attached to the mat material (10).

10. The exhaust system (1, 2) according to any one of claims 1 to 9,
wherein the mat material (10) is used as a heat insulating material.

11. The exhaust system (1, 2) according to any one of claims to 1 to 9,
wherein the mat material (10) is used as a holding seal material (110) for holding the exhaust gas treating body (120) by being wrapped around the exhaust gas treating body (120) and disposed between the exhaust gas treating body (120) and a metal casing (130) in the exhaust gas purification device (100).

## Patentansprüche

1. Abgassystem (1, 2), umfassend:
mindestens ein Element ausgewählt aus der Gruppe bestehend aus einer Abgasreinigungsvorrichtung (100), einem Abgasbehandlungskörper (120) und einer Abgasleitung (140, 150) in einem Kraftfahrzeugabgassystem (1, 2); und
ein Mattenmaterial (10), das auf einer Oberfläche des mindestens einen Elements angeordnet ist, wobei das Mattenmaterial (10) umfasst:
anorganische Fasern; und
einen öligen Faserzerstreuungsinhibitor, der auf eine Oberfläche der anorganischen Fasern aufgebracht ist,
wobei die Menge des aufgebrachten Faserzerstreuungsinhibitors 0,05 bis 2,0 Gew.-% beträgt;
**dadurch gekennzeichnet, dass**
wenn das Mattenmaterial (10) in Dickenrichtung in einen oberen Oberflächenabschnitt, einen mittleren Abschnitt und einen unteren Oberflächenabschnitt dreigeteilt wird, die Menge des an dem unteren Oberflächenabschnitt aufgebrachten Faserzerstreuungsinhibitors kleiner ist als die im oberen Oberflächenabschnitt, und
das Mattenmaterial (10) so angeordnet ist, dass der untere Oberflächenabschnitt dem mindestens einem Element zugewandt ist.

2. Abgassystem (1, 2) nach Anspruch 1, wobei der Faserzerstreuungsinhibitor Silikonöl enthält.

3. Abgassystem (1, 2) nach Anspruch 2, wobei der Faserzerstreuungsinhibitor ferner ein Tensid enthält.

4. Abgassystem (1, 2) nach Anspruch 2 oder 3, wobei das Mattenmaterial (10) eine wasserabweisende Oberfläche aufweist.

5. Abgassystem (1, 2) nach Anspruch 1, wobei der Faserzerstreuungsinhibitor eine pflanzliche Komponente enthält.

6. Abgassystem (1, 2) nach Anspruch 5, wobei der Faserzerstreuungsinhibitor ferner ein Tensid enthält.

7. Abgassystem (1, 2) nach Anspruch 1, wobei der Faserzerstreuungsinhibitor ein Tensid enthält, das aus einer pflanzlichen Komponente gebildet ist.

8. Abgassystem (1, 2) nach einem der Ansprüche 1 bis 7, wobei das Mattenmaterial (10) Nadelstanzmarkierungen enthält.

9. Abgassystem (1, 2) nach einem der Ansprüche 1 bis 8, ferner umfassend anorganische Partikel, die an dem Mattenmaterial (10) angebracht sind.

10. Abgassystem (1, 2) nach einem der Ansprüche 1 bis 9, wobei das Mattenmaterial (10) als wärmeisolierendes Material verwendet wird.

11. Abgassystem (1, 2) nach einem der Ansprüche 1 bis 9, wobei das Mattenmaterial (10) als Haltedichtungsmaterial (110) zum Halten des Abgasbehandlungskörpers (120) verwendet wird, indem es um den Abgasbehandlungskörper (120) gewickelt und zwischen dem Abgasbehandlungskörper (120) und einem Metallgehäuse (130) in der Abgasreinigungsvorrichtung (100) angeordnet wird.

## Revendications

1. Système d'échappement (1, 2) comprenant :
au moins un membre choisi dans le groupe constitué par un dispositif de purification de gaz d'échappement (100), un corps de traitement de gaz d'échappement (120), et une tubulure d'échappement (140, 150) dans un système d'échappement d'automobile (1, 2) ; et
un matériau de tapis (10) disposé sur une surface de l'au moins un membre, le matériau de tapis (10) comprenant :
des fibres inorganiques ; et
un inhibiteur de dissémination de fibres huileux attaché à une surface des fibres inorganiques,
dans lequel la quantité de l'inhibiteur de dissémination de fibres attaché est de 0,05 à 2,0 % en poids,
**caractérisé en ce que**
quand le matériau de tapis (10) est divisé en trois en une partie de surface supérieure, une partie centrale, et une partie de surface inférieure dans le sens de l'épaisseur, la quantité de l'inhibiteur de dissémination de fibres attaché à la partie de surface inférieure est inférieure à celle dans la partie de surface supérieure, et
le matériau de tapis (10) est disposé de façon que la partie de surface inférieure fasse face à l'au moins un membre.

2. Système d'échappement (1, 2) selon la revendication 1, dans lequel l'inhibiteur de dissémination de fibres contient une huile siliconée.

3. Système d'échappement (1, 2) selon la revendication 2, dans lequel l'inhibiteur de dissémination de fibres contient en outre un tensioactif.

4. Système d'échappement (1, 2) selon la revendication 2 ou 3, dans lequel le matériau de tapis (10) a une surface hydrofuge.

5. Système d'échappement (1, 2) selon la revendication 1, dans lequel l'inhibiteur de dissémination de fibres contient un composant d'origine végétale.

6. Système d'échappement (1, 2) selon la revendication 5, dans lequel l'inhibiteur de dissémination de fibres contient en outre un tensioactif.

7. Système d'échappement (1, 2) selon la revendication 1, dans lequel l'inhibiteur de dissémination de fibres contient un tensioactif formé à partir d'un composant d'origine végétale.

8. Système d'échappement (1, 2) selon l'une quelconque des revendications 1 à 7, dans lequel le matériau de tapis (10) contient des marques aiguilletées.

9. Système d'échappement (1, 2) selon l'une quelconque des revendications 1 à 8, comprenant en outre des particules inorganiques attachées au matériau de tapis (10).

10. Système d'échappement (1, 2) selon l'une quelconque des revendications 1 à 9, dans lequel le matériau de tapis (10) est utilisé en tant que matériau isolant thermique.

11. Système d'échappement (1, 2) selon l'une quelconque des revendications 1 à 9, dans lequel le matériau de tapis (10) est utilisé en tant que matériau de retenue et d'étanchéité (110) pour retenir le corps de traitement de gaz d'échappement (120) en étant enroulé autour du corps de traitement de gaz d'échappement (120) et disposé entre le corps de traitement de gaz d'échappement (120) et un carter métallique (130) dans le dispositif de purification de gaz d'échappement (100).
